# NEUE EUROPÄISCHE PATENTSCHRIFT

(11) **EP 2 163 507 B2**
(45) Veröffentlichungstag und Bekanntmachung des Hinweises auf die Entscheidung über den Einspruch: **13.05.2020**
(45) Hinweis auf die Patenterteilung: 24.11.2010
(21) Anmeldenummer: 08016194.6
(22) Anmeldetag: 15.09.2008
(51) Int. Cl.: A47L 9/16

(54) **Regalbediengerät-Greifer und Verfahren zum Betreiben des Regalbediengerät-Greifers**
Shelf operating device gripper and method for operating same
Poignée d'appareil de commande de rayonnage et procédé de fonctionnement de l'appareil de commande de rayonnage

(43) Veröffentlichungstag der Anmeldung: 17.03.2010
(73) Patentinhaber: Riedl, Markus Erich, 99338 Angelroda (DE)
(72) Erfinder: Riedl, Markus Erich, 99338 Angelroda (DE)
(74) Vertreter: Jakelski & Althoff Patentanwälte PartG mbB

(56) Entgegenhaltungen:
- EP-A- 1 693 317
- EP-A- 1 862 405
- EP-A1- 0 733 563
- EP-B1- 1 598 291
- WO-A1-89/04900
- WO-A1-93/19355
- DE-A1- 4 401 818
- DE-A1- 19 810 654
- DE-A1- 19 955 615
- DE-A1-102004 022 643
- DE-A1-102005 029 398
- DE-U1- 20 303 376
- DE-U1-202004 010 216
- US-A1- 2003 185 656
- US-B1- 6 777 903
- "Grundlagen der Fördertechnik", 1994, Vieweg & Sohn Verlagsgesellschaft, Braunschweig/Wiesbaden
- Samson AG: "Typenblatt T5801", Drehantrieb Bonn, 1999,
- "Montageanweisung D-NZM 14 H14U-SW", Moeller GmbH, 1998, Neunburg
- SIPOS Aktorik: "Elektrische Drehantriebe für kerntechnische Anlagen", 2004
- FEE GmbH Automation: "DREHANTRIEBE", 2010, Neunburg

## Beschreibung

Die Erfindung geht aus von einem Regalbediengerät-Greifer und von einem Verfahren zum Betreiben des Regalbediengerät-Greifers nach der Gattung der unabhängigen Ansprüche.

### Stand der Technik

In der DE 20 2004 002 054 U1 ist ein Regalbediengerät zur Einlagerung und Auslagerung von Lagergut beschrieben, welches auf mindestens einer, dem Regal zugewandten Seite eine Teleskopiervorrichtung aufweist, die einen ausfahrbaren Stempel enthält, an dessen vorderen Ende eine Saugvorrichtung angeordnet ist. Nach dem Festsaugen der Saugvorrichtung an dem auszulagernden Lagergut kann das Lagergut von einem Regalboden des Regals auf das Regalbediengerät gezogen werden. Den weiteren Transport des Lagerguts auf dem Regalbediengerät übernimmt ein im Regalbediengerät enthaltendes Förderband.

In der DE 196 13 707 A1 ist ein Regalbediengerät beschrieben, welches vor ein in einem Regal gelagertes Packstück positionierbar ist. Das Regalbediengerät enthält eine Greifvorrichtung, die in Transportrichtung des Packstücks ein- und ausfahrbare Greifer aufweist. Beide Greifer sind gegenläufig und parallel zueinander in eine Klemmstellung gegen die Seitenflächen der Packstücke bewegbar. Die beiden Greifer tauchen in einen zwischen den Packstücken freigelassenen Spalt ein, wobei die Greifer parallel zueinander geführt sind. Die parallele Führung ermöglicht es, die Abmessungen des Spalts gering zu halten, sodass eine hohe Ausnutzung der Regalfläche sichergestellt ist.

Das in der EP 1 693 317 A2 beschriebene Regalbediengerät, welches den jeweiligen Oberbegriff den unabhängigen Ansprüche 1 und 13 offenbart, weist einfahrbare und ausfahrbare Greifer auf, die ebenfalls gegenläufig in eine Klemmstellung gegen die Seitenflächen der zu ergreifenden Packstücke bringbar sind. Die Greifer sind wie bei dem zuvor beschriebenen Regalbediengerät parallel zueinander ausgerichtet. Das vorbekannte Regalbediengerät ist geeignet, Packstücke in sich gegenüber angeordneten Regalen ohne Schwenkbewegung auszutauschen. Hierbei werden die in einem Regalfach eines ersten Regals gelagerten Packstücke zunächst auf eine Auflagefläche des Regalbediengeräts mittels der Greifer gezogen und anschließend mittels der Greifer in das Regalfach des gegenüberliegenden Regals geschoben.

Der Erfindung liegt die Aufgabe zugrunde, ein Regalbediengerät und ein Verfahren zum Betreiben des Regalbediengeräts anzugeben, die eine hohe Umschlagleistung des Lagerguts ermöglichen.

### Offenbarung der Erfindung

Die Erfindung geht aus von einem Regalbediengerät für Lagergut, welches auf Regalböden eines Regals einzulagern oder von den Regalböden des Regals auszulagern oder zu transportieren ist, mit einer Ablagefläche für das Lagergut und mit zwei Führungen, die Greifarme aufnehmen, welche im Wesentlichen quer zur Regalgassen-Richtung in Lagergut-Verschieberichtung verschiebbar und aus den Führungen ausfahrbar sind. Das Regalbediengerät zeigt wenigstens eine Führung, die um eine vertikale Regalachse drehbar ausgestaltet ist. Die drehbare Ausgestaltung der wenigstens einen Führung ermöglicht es, dass das Lagergut durch ein Drehen der wenigstens einen Führung mit den Greifarmen ergriffen werden kann. Dadurch wird ein Festklemmen und Fixieren sowohl während des Transports von Lagergütern als auch beim Verschieben der Lagergüter auf einfache Weise ermöglicht.

Das erfindungsgemäße Regalbediengerät gemäß dem kennzeichnenden Teil von Anspruch 1 ermöglicht eine hohe Umschlagsleistung von Lagergut, wobei insbesondere das Lagergut unterschiedliche, in Regalgassen-Richtung beziehungsweise unterschiedliche Breiten in Bezug auf den Abstand zwischen den beiden Greifarmen aufweisen kann. Insbesondere können die Greifarme gleichzeitig mehrere Lagergüter ergreifen, wobei sogar ein breiteres Lagergut weiter vorn auf dem Regalboden gelagert sein kann als ein weniger breites Lagergut, das weiter hinten auf dem Regalboden gelagert ist. Die hohe Umschlagsleistung wird durch eine hohe Sicherheit beim Ergreifen und/oder beim Festklemmen beziehungsweise Fixieren der Lagergüter erreicht, welches die Voraussetzung für schnelle Greifvorgänge und Verfahrbewegungen des Regalbediengeräts mit hohen Beschleunigungen und Geschwindigkeiten darstellt. Vorteilhafte Weiterbildungen und Ausgestaltungen des erfindungsgemäßen Regalbediengeräts ergeben sich aus abhängigen Ansprüchen.

Gemäß einer Ausgestaltung sind beide Führungen um eine vertikale Achse drehbar ausgestaltet. Mit dieser Maßnahme wird der für die Drehung benötigte Raum auf beide Führungen verteilt, sodass der zum Ausfahren der Greifarme zwischen den Lagegütem benötigte Abstand verringert werden kann. Vorzugsweise ist eine Drehung der beiden Greifarme um denselben Winkel gegeneinander vorgesehen, sodass sich eine symmetrische Anordnung ergibt.

Eine Ausgestaltung sieht vor, dass die Greifarme beidseitig aus den Führungen ausfahrbar sind. Dadurch kann in vorteilhafter Weise ein Transport eines Lagerguts von einem Regalboden des einen Regals auf einen Regalboden des gegenüberliegenden Regals ohne eine Drehbewegung um 180° des Teils des Regalbediengeräts, das die Greifarme trägt, vorgenommen werden. Dadurch wird bei dieser Transportaufgabe ebenfalls eine geringe Umschlagzeit erzielt.

Eine zusätzliche Ausgestaltung sieht vor, dass sich die Ablagefläche für das Lagergut nahezu vollständig über die gesamte Breite der Regalgasse erstreckt. Mit dieser Maßnahme kann das Lagergut vom Regalboden unmittelbar auf die Ablagefläche transportiert werden, wobei die von den Greifarmen aufzubringenden Kräfte lediglich für den Transport in Lagergut-Verschieberichtung ausreichend bemessen sein müssen. Eine Bemessung der Kraft zum Einklemmen des Lagerguts, derart, dass das Lagergut frei schwebend transportiert werden kann, ist dadurch nicht erforderlich.

Eine vorteilhafte Ausgestaltung sieht vor, dass wenigstens ein vorderes Endstück des Greifarms im Wesentlichen quer zur Lagergut-Verschieberichtung biegbar ausgestaltet ist. In Verbindung mit der Drehung ist es mit dieser Maßnahme möglich, dass das elastische, biegbare Endstück des Greifarms mehrere Lagergüter gleichzeitig festklemmen kann.

Eine andere Ausgestaltung sieht vor, dass die Ablagefläche für das Lagergut als Transportvorrichtung ausgestaltet ist, welche das Lagergut in Lagergut-Verschieberichtung transportieren kann. Mit dieser Maßnahme wird insbesondere der Transport von Lagergütern zwischen zwei einander gegenüberliegenden Regalen ohne weitere Maßnahmen besonders einfach möglich. Vorzugsweise ist die Transportvorrichtung für das Lagergut als Förderband realisiert.

Erfindungsgemäß ist ein einziger Klemmantrieb vorgesehen, mit dem wenigstens eine Führung mit dem darin angeordneten Greifarm quer zur Lagergut-Transportrichtung beziehungsweise in Lagergassen-Richtung bewegbar ist. Mit dieser zusätzlichen Maßnahme können Lagergüter festgeklemmt, auf der Ablagefläche zentriert oder während einer Bewegung des gesamten Regalbediengeräts fixiert und damit gesichert werden. Im Zusammenwirken mit der Drehbewegung wird ein weiter Klemm- beziehungsweise Fixierbereich von gleich breiten oder insbesondere auch unterschiedlich breiten Lagergütern erzielt.

Eine Ausgestaltung sieht vor, dass die Drehachse der wenigstens einen Führung fest vorgegeben ist und dass zur Durchführung der Drehbewegung ein Drehantrieb vorgesehen ist. Durch die Aufteilung des Antriebs auf einen Drehantrieb und einen einzigen Klemmantrieb ergibt sich eine einfache Ansteuerung.

Eine Weiterbildung dieser Ausgestaltung sieht vor, dass die Drehachse der drehbaren Führung im Wesentlichen in der Mitte des Regalbediengeräts bezogen auf die Lagergut-Verschieberichtung positioniert ist. Mit dieser Maßnahme wird ebenfalls der für die Drehung erforderliche Raum minimiert.

Das erfindungsgemäße Verfahren zum Betreiben des erfindungsgemäßen Regalbediengeräts zeichnet sich dadurch aus, dass das Lagergut durch eine Drehung wenigstens einer Führung festgeklemmt wird. Die dadurch erzielbaren Vorteile entsprechen denen, die mit der erfindungsgemäßen Vorrichtung erzielt werden.

Eine Ausgestaltung des erfindungsgemäßen Verfahrens sieht vor, dass das Lagergut durch eine Klemmbewegung wenigstens einer Führung festgeklemmt wird.

Eine andere Ausgestaltung des erfindungsgemäßen Verfahrens sieht vor, dass das auf der Ablagefläche vorhandene Lagergut durch eine von einem einzigen Klemmantrieb bereitgestellte Klemmbewegung wenigstens einer Führung festgeklemmt wird.

Eine weitere Ausgestaltung des erfindungsgemäßen Verfahrens sieht vor, dass das auf der Ablagefläche vorhandene Lagergut während des Positionierens des Regalbediengeräts in der Regalgasse durch eine Drehung wenigstens einer Führung fixiert und gesichert wird. Dadurch wird ein sicherer Transport von Lagergütern auch bei hoher Geschwindigkeit des Regalbediengerät ermöglicht.

Eine zusätzliche Ausgestaltung des erfindungsgemäßen Verfahrens sieht vor, dass die Transportvorrichtung und die Greifarme zum Transportieren des Lagerguts auf dem Regalbediengerät synchron angetrieben werden. Mit dieser Maßnahme wird eine Reibung von Lagergütern während des Verschiebens auf der Ablagefläche vermieden.

Eine Ausgestaltung des erfindungsgemäßen Verfahren sieht vor, dass beim Ein- und Auslagern von Lagergütern bei der Ansteuerung des wenigstens einen Drehantriebs die Position der Greifarme und die Drehmomente derart festgelegt werden, dass die Lagergüter sicher gegriffen werden und/oder dass die Außenkontur der Greifarme seitlich neben den ein- oder auszulagernden Lagergütern liegende Lagergüter nicht berührt oder verschiebt.

Ausführungsbeispiele des erfindungsgemäßen Regalbediengeräts sind in der Zeichnung dargestellt und in der nachfolgenden Beschreibung, ebenso wie das erfindungsgemäße Verfahren zum Betreiben des erfindungsgemäßen Regalbediengeräts, näher erläutert.

### Kurzbeschreibung der Figuren

Figur 1 zeigt eine Draufsicht auf ein erfindungsgemäßes Regalbediengerät im Ruhezustand zwischen zwei einander gegenüberliegend angeordneten Regalen,
Figur 2 zeigt eine nicht erfindungsgemäße Ausgestaltung des Regalbediengerät,
Figur 3 zeigt das Regalbediengerät gemäß einer ersten Ausgestaltung beim Ergreifen von Lagergut,
Figur 4 zeigt das Regalbediengerät gemäß einer weiteren Ausgestaltung beim Ergreifen von Lagergut,
Figur 5 zeigt das Regalbediengerät beim Ergreifen von unterschiedlich breiten Lagergütern,
Figur 6 zeigt das Regalbediengerät während des Auslagerns von Lagergütern von einem Regalboden des Regals,
Figur 7 zeigt das Regalbediengerät nach dem Auslagern von Lagergütern von dem Regalboden,
Figur 8 zeigt das Regalbediengerät beim Zentrieren von Lagergütern,
Figur 9 zeigt das Regalbediengerät während des Einlagerns von Lagergütern auf einen Regalboden,
Figur 10 zeigt das Regalbediengerät am Ende des Einlagervorgangs von Lagergütern,
Figur 11 zeigt das Regalbediengerät während des Einlagerns von Lagergütern auf einen Regalboden gemäß einer anderen Ausgestaltung,
Figur 12 zeigt das Regalbediengerät am Ende des Einlagerungsvorgangs von Lagergütern gemäß der alternativen Ausgestaltung,
Figur 13 zeigt das Regalbediengerät während eines Positionierens des Regalbediengeräts mit eingeklemmten Lagergütern und
Figur 14 zeigt das Regalbediengerät während des Positionierens des Regalbediengeräts mit fixierten und gesicherten Lagergütern.

### Detaillierte Beschreibung der Ausführungsbeispiele

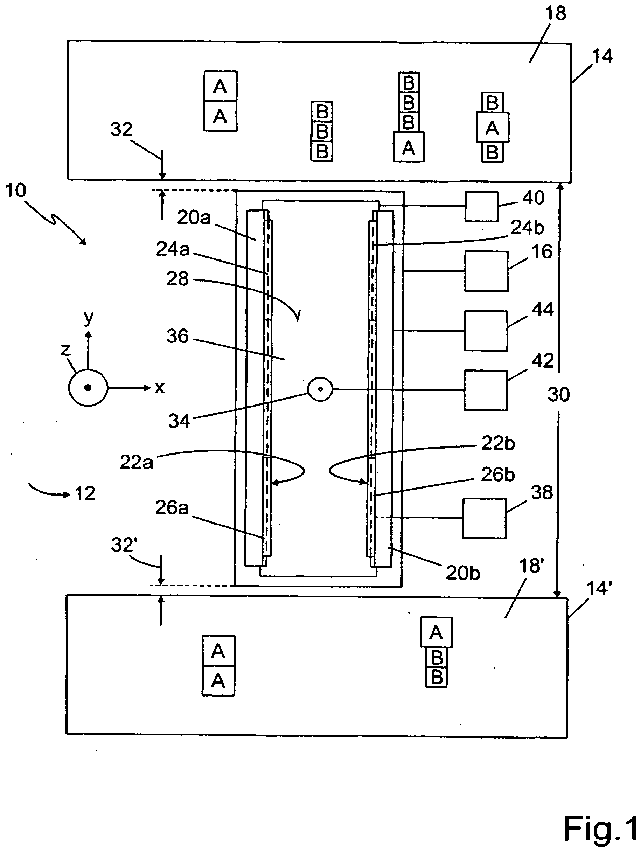

Figur 1 zeigt ein erfindungsgemäßes Regalbediengerät 10, welches im Allgemeinen in einer Regalgasse 12 zwischen zwei einander gegenüberliegenden Regalen 14, 14' oder zumindest vor einem einzelnen Regal 14 sowohl in Regalgassen-Richtung X als auch in vertikaler Regalrichtung Z positionierbar ist. Zur Positionierung in Regalgassen-Richtung X sowie gegebenenfalls in vertikaler Regalrichtung Z ist ein Positionierantrieb 16 vorgesehen.

Das Regalbediengerät 10 ist zum Einlagern und/oder Auslagern und/oder Transportieren von Lagergut A, B vorgesehen, das auf Regalböden 18, 18' der Regale 14, 14' gelagert ist.

Das Regalbediengerät 10 enthält zwei gerade Führungen 20a, 20b, die im Wesentlichen quer zur Regalgassen-Richtung X beziehungsweise im Wesentlichen in einer Lagergut-Verschieberichtung Y angeordnet sind. Die Führungen 20a, 20b nehmen jeweils einen Greifarm 22a, 22b auf, der jeweils parallel zur Führung 20a, 20b in Längsrichtung der Führung 20a, 20b, also in Lagergut-Verschieberichtung Y aus- und einfahrbar ist. In Figur 1 ist die Ruheposition des Regalbediengeräts 10 dargestellt, bei welcher die Greifarme 22a, 22b nicht ausgefahren sind.

Gemäß einer Ausgestaltung weist wenigstens ein Greifarm 22a, 22b wenigstens ein flexibles Endstück 24a, 24b, 26a, 26b auf, welches in Regalgassen-Richtung X biegbar ist. In Figur 1 ist eine Ausgestaltung dargestellt, bei welcher sämtliche Endstücke 24a, 24b, 26a, 26b biegbar ausgestaltet sind.

Das Regalbediengerät 10 stellt eine Ablagefläche 28 für das Lagergut A, B bereit.

Vorzugsweise erstreckt sich das Regalbediengerät 10, zumindest jedoch die Ablagefläche 28, nahezu über die gesamte Breite 30 der Regalgasse 12. Der Abstand 32, 32' zwischen der Ablagefläche 28 und dem Regalboden 18, 18' ist vorzugsweise derart festgelegt, dass das Lagergut A, B ohne frei zu schweben unmittelbar vom Regalboden 18, 18' auf die Ablagefläche 28 beziehungsweise in umgekehrter Richtung transportiert werden kann, sodass die von den Greifarmen 22a, 22b aufzubringenden Klemmkräfte nur zur Durchführung der Verschiebeaufgabe in Lagergut-Verschieberichtung Y ausreichen muss, wobei das Lagergut A, B stets zumindest teilweise auf einer Unterlage gelagert ist oder gleiten kann. Ein Anheben des Lagerguts A, B mit den Greifarmen 22a, 22b ist dadurch nicht erforderlich. Das Anheben kann jedoch gegebenenfalls vorgesehen sein.

Erfindungsgemäß ist vorgesehen, dass zumindest eine Führung 20a, 20b drehbar um eine vertikale Achse Z ausgestaltet ist. Vorzugsweise sind beide Führungen 20a, 20b drehbar ausgestaltet. Gemäß dem in Figur 1 gezeigten ersten Ausführungsbeispiel des erfindungsgemäßen Regalbediengeräts 10 ist eine fest vorgegebene Drehachse 34 wenigstens einer Führung 20a, 20b vorgesehen, die sowohl in Regalgassen-Richtung X als auch in Lagergut-Verschieberichtung Y symmetrisch zur wenigstens einen Führung 20a, 20b positioniert ist. In Figur 1 ist zusätzlich der spezielle Fall eingetragen, bei dem die Drehachse 34 in Regalgassen-Richtung X symmetrisch auf dem Regalbediengerät 10 positioniert ist. Gezeigt sind demnach zwei spezielle Fälle, die insgesamt zu einer symmetrischen Anordnung führen, bei welcher der für die Durchführung der Drehbewegung erforderliche Raum für die wenigstens eine Führung 20a, 20b ein Minimum aufweist. Neben der Drehbewegung kann wenigstens eine Führung 20a, 20b in Regalgassen-Richtung X beziehungsweise quer zur Lagergut-Verschieberichtung Y eine Klemmbewegung durchführen. Vorzugsweise können beide Führungen 20a, 20b eine Klemmbewegung in Regalgassen-Richtung X durchführen, sodass eine gegeneinander gerichtete Klemmbewegung ermöglicht wird.

Die für das Lagergut A, B zur Verfügung gestellte Ablagefläche 28 ist vorzugsweise zumindest teilweise als Transportvorrichtung 36 ausgestaltet. Besonders geeignet ist eine Realisierung der Transportvorrichtung 36 als ein Förderband.

Zum Ein- beziehungsweise Ausfahren der Greifarme 22a, 22b wenigstens näherungsweise in Lagergut-Verschieberichtung Y aus den Führungen 20a, 20b ist ein Verschiebeantrieb 38, zum Bewegen der Transportvorrichtung 36 ein Transportantrieb 40, zur Durchführung der Drehbewegung ein Drehantrieb 42 und zum Klemmen von Lagergütern A, B ein Klemmantrieb 44 vorgesehen.

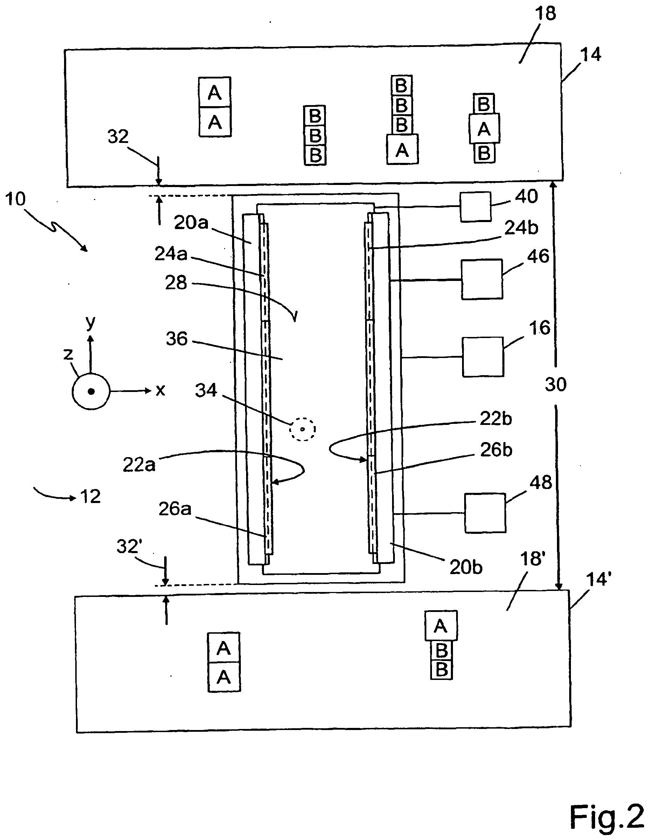

Figur 2 zeigt eine nicht erfindungsgemäße Ausgestaltung des Regalbediengeräts 10. Diejenigen in Figur 1 gezeigten Teile, die mit den in Figur 2 gezeigten Teilen übereinstimmen, tragen jeweils dieselben Bezugszeichen. Diese Vereinbarung gilt auch für die folgenden Figuren.

Zur Bereitstellung der Drehbewegung wenigstens einer Führung 20a, 20b sind anstelle des Drehantriebs 44 zumindest zwei Klemmantriebe 46, 48 vorgesehen, wobei beide Klemmantriebe 46, 48 in Bezug auf die Lagergut-Transportvorrichtung Y beziehungsweise in Bezug quer zur Regalgassen-Richtung X an unterschiedlichen Orten an der wenigstens einen Führung 20a, 20b angreifen. Wenn beide Klemmantriebe 46, 48 identisch angesteuert werden, führt die wenigstens eine Führung 20a, 20b eine Klemmbewegung ausschließlich in Regalgassen-Richtung X durch. Wenn jedoch beide Klemmantriebe 46, 48 unterschiedlich angesteuert werden, wird eine Drehbewegung der wenigstens einen Führung 20a, 20b um eine vertikale Regalachse Z erzielt, wobei gegebenenfalls zusätzlich eine Klemmbewegung in Regalgassen-Richtung X überlagert werden kann.

Von den beiden Klemmantrieben 46, 48 kann ein Klemmantrieb 46, 48 zum Festklemmen von Lagergütern A, B mit einem bestimmten Drehmoment angesteuert werden, welches vorzugsweise positionsabhängig variiert wird, während der andere Klemmantrieb 46, 48 nur zum Positionieren herangezogen wird, wobei die Positionierung der Drehbewegung entspricht. Das Drehmoment ist derart festzulegen, dass das zu transportierende Lagergut A, B sicher von den Greifarmen 22a, 22b festgeklemmt werden kann, dass die Oberfläche des Lagerguts 22a, 22b jedoch nicht beschädigt wird.

Die Drehachse 34 der wenigstens einen Führung 20a, 20b ist bei dieser Ausgestaltung des Regalbediengeräts 10 nicht mehr festgelegt. Bei dem in Figur 2 gezeigten Regalbediengerät 10 ist die Drehachse 34 deshalb weder in der Mitte bezogen auf die Lagergut-Transportvorrichtung Y noch in der Mitte bezogen auf die Regalgassen-Richtung X auf dem Regalbediengerät 10 eingetragen. Die Drehachse 34 variiert in Abhängigkeit von der Ansteuerung der beiden Klemmantriebe 46, 48.

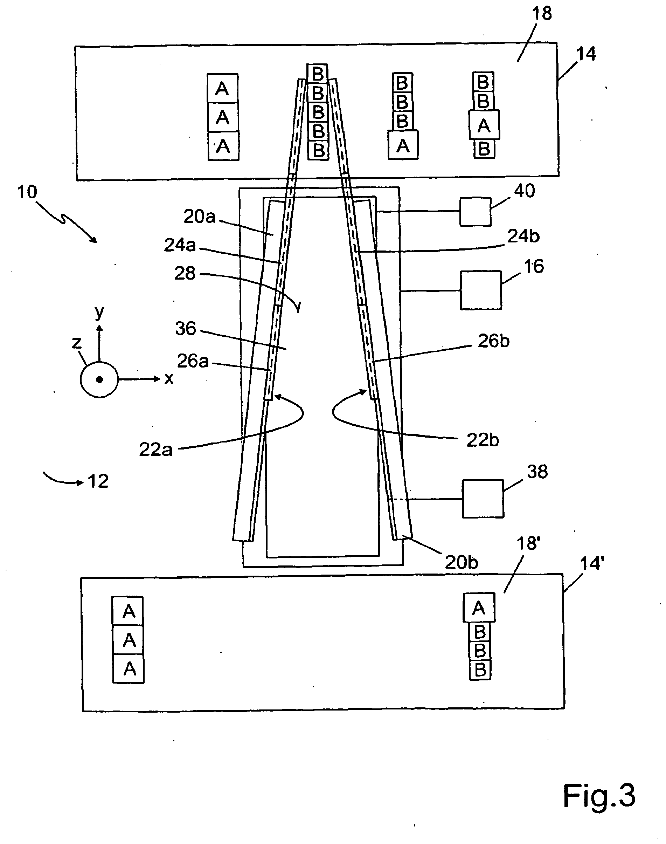

Figur 3 zeigt das erfindungsgemäße Regalbediengerät 10 in einer Position, bei welcher beide Greifarme 22a, 22b, in Lagergut-Verschieberichtung Y auf den Regalboden 18 des Regals 14 ausgefahren sind und beide Führungen 20a, 20b mit den darin geführten Greifarmen 22a, 22b symmetrisch derart gegeneinander gedreht sind, dass die Endstücke 24a, 24b der Greifarme 22a, 22b das hinterste Lagergut B festklemmen. Dadurch können sämtliche in Lagergut-Verschieberichtung Y hintereinander gelagerte Lagergüter B in einem Arbeitsgang aus dem Regalboden 18 herausgezogen werden. Aufgrund der Drehung sind die Führungen 20a, 20b mit den Greifarmen 22a, 22b bei der in Figur 2 gezeigten Position nicht mehr parallel zur Lagergut-Verschieberichtung Y ausgerichtet. In der vorliegenden Anmeldung wird deshalb die Orientierung der Führungen 20a, 20b einschließlich der Greifarme 22a, 22b als wenigstens näherungsweise in Lagergut-Verschieberichtung Y beziehungsweise wenigstens näherungsweise senkrecht zur Regalgassen-Richtung X bezeichnet, sodass sämtliche vorkommenden Positionen erfasst sind. Neben der Drehbewegung kann eine Klemmbewegung vorgesehen sein. Damit können einerseits der Drehwinkel und andererseits das Klemm-Moment variiert werden.

Es wird darauf hingewiesen, dass in Figur 3 sowie in den folgenden Figuren der Drehwinkel zur Verdeutlichung erheblich übertrieben eingetragen ist. Die Drehung der wenigstens einen Führung 20a, 20b gemäß Figur 3 und gemäß den folgenden Figuren kann durch den in Figur 1 gezeigten Drehantrieb 44 mit fest vorgegebener Drehachse 34 bereitgestellt werden.

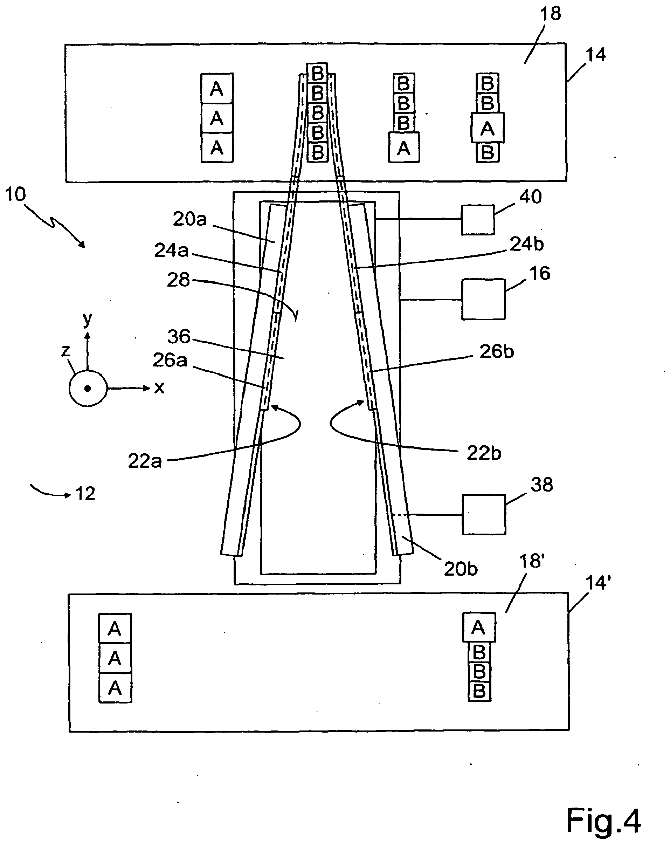

Unterstützt wird die Möglichkeit, mehrere in Lagergut-Verschieberichtung Y hintereinander gelagerte Lagergüter A, B in einem Arbeitsgang aus dem Regalboden 18, 18' herausziehen oder hineinschieben zu können, durch die in Regalgassen-Richtung X biegbare Ausgestaltung zumindest eines Endstücks 24a, 24b, 26a, 26b zumindest eines Greifarms 22a, 22b. Ein Ausführungsbeispiel, bei welchem beide auf derselben Seite liegenden Endstücke 24a, 24b der Greifarme 22a, 22b biegbar ausgestaltet sind, ist in Figur 4 gezeigt.

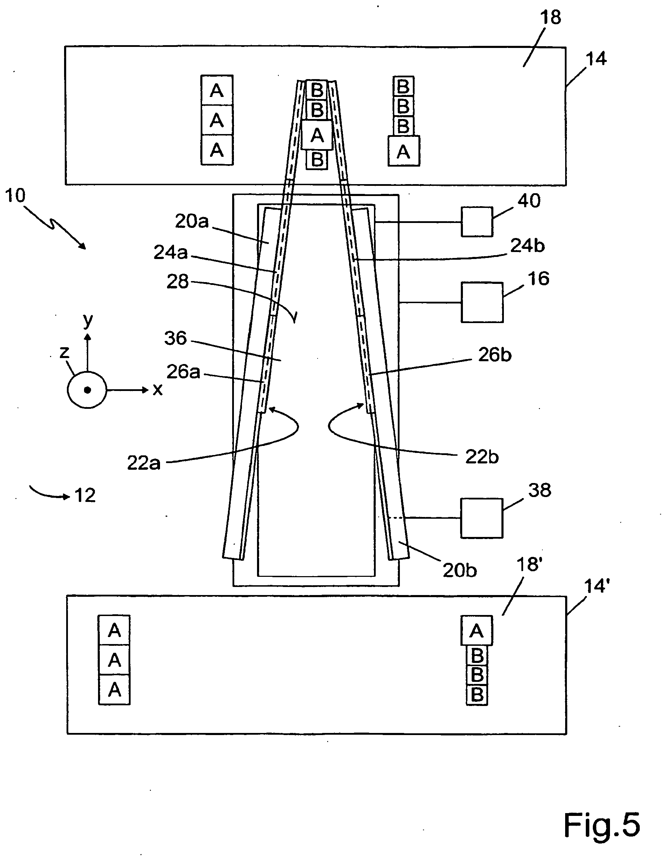

Figur 5 zeigt ein Ausführungsbeispiel, bei welchem die Greifarme 22a, 22b mehrere, hintereinander auf dem Regalboden 18 angeordnete Lagergüter A, B aus dem Regal 14 auslagern. Wegen der Drehung der Führungen 20a, 20b um die vertikale Regalachse Z können die Lagergüter A, B unterschiedliche Breiten bezogen auf die Regalgassen-Richtung X aufweisen. Dennoch kann auch in diesem Fall die gesamte Reihe von Lagergütern A, B in einem Arbeitsgang vom Regalboden 18 auf die Ablagefläche 28 des Regalbediengeräts 10 gezogen werden.

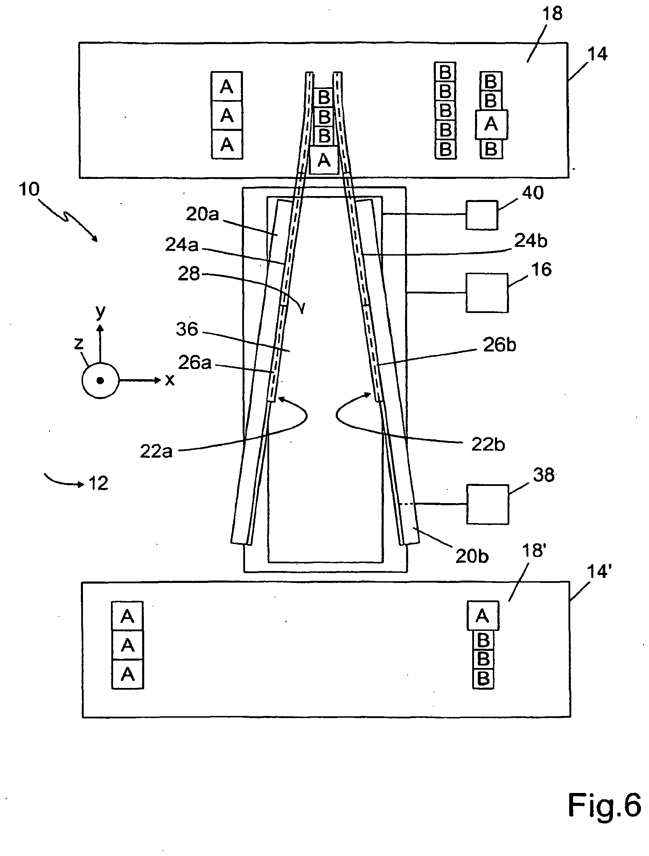

Figur 6 zeigt ein Ausführungsbeispiel, bei welchem die beiden Endstücke 24a, 24b, die in Regalgassen-Richtung X biegbar ausgestaltet sind, ebenfalls mehrere, hintereinander auf dem Regalboden 18 angeordnete Lagergüter A, B aus dem Regal 14 auslagern. Aufgrund der Drehung der Führungen 20a, 20b um die vertikale Regalachse Z ist auch bei diesem Ausführungsbeispiel eine Anordnung der Lagergüter A, B auf dem Regalboden 18 derart möglich, dass ein breiteres Lagergut B in der Reihenfolge vor weniger breiten Lagergütern angeordnet sein kann. Aufgrund der biegsamen Ausgestaltung wenigstens eines Endstücks 24a, 24b, 26a, 26b der Greifarme 22a, 22b können gegebenenfalls kraftschlüssige Kontakte der Endstücke 24a, 24b, 26a, 26b mit den Lagergütern A, B erzielt werden.

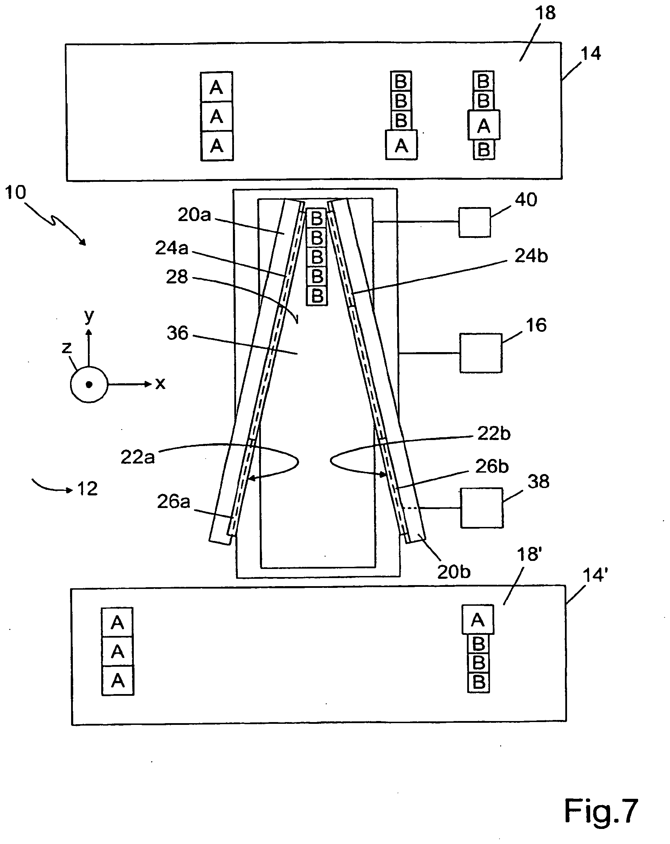

Die Figuren 7 bis 10 zeigen in Verbindung mit Figur 3 als Beispiel für eine Auslagerung von Lagergut A, B von einem Regalboden 14, 14' eine Umlagerung von Lagergut A, B vom Regalboden 18 des Regals 14 auf den Regalboden 18' des Regals 14'.

Die ausgefahrenen Greifarme 22a, 22b ergreifen gemäß Figur 3 eine Reihe von Lagergütern A, B, die auf dem Regalboden 18 abgestellt sind. Im nächsten Schritt werden die Greifarme 22a, 22b in die Führungen 20a, 20b eingefahren, wobei die Greifarme 22a, 22b die Reihe von Lagergütern A, B auf die Ablagefläche 28 ziehen. Bei diesem Verfahrenschritt tritt eine Änderung des Drehwinkels der beiden Führungen 20a, 20b auf, wobei der Drehwinkel vorzugsweise mit zunehmendem Verschiebeweg in Richtung des Regalbediengeräts 10 geändert wird. Zusätzlich kann die Klemmbewegung der wenigstens einen Führung 20a, 20b aktiviert werden.

Gemäß einer vorteilhaften Ausgestaltung kann vorgesehen sein, dass spätestens ab dem Zeitpunkt, an dem das erste Lagergut A, B die vorzugsweise als Transportvorrichtung 36 ausgestaltete Ablagefläche 28 erreicht, die Bewegungen der Greifarme 22a, 22b und die der Transportvorrichtung 36 synchronisiert werden, sodass die Reibung zwischen dem Lagergut A, B und der Ablagefläche 28 entfällt.

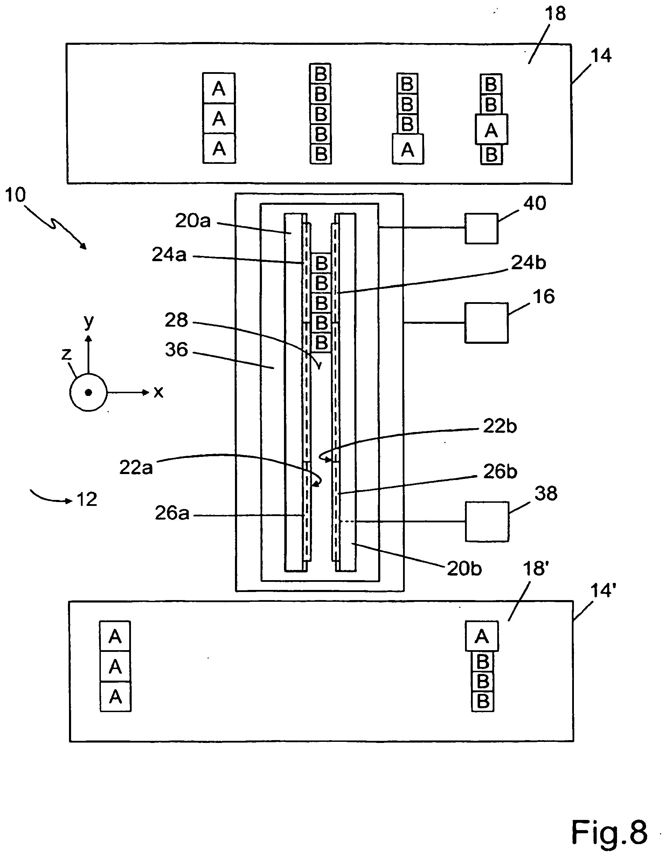

Im nächsten Schritt kann gemäß Figur 8 ein Klemmvorgang vorgesehen sein, der zum Zentrieren des Lagerguts A, B auf der Lagerfläche 28 dient.

Im nächsten Verfahrenschritt wird das Lagergut A, 8 auf der vorzugsweise als Transportvorrichtung 36 realisierten Ablagefläche 28 des Regalbediengeräts 10 an das andere Ende der Ablagefläche 28 transportiert.

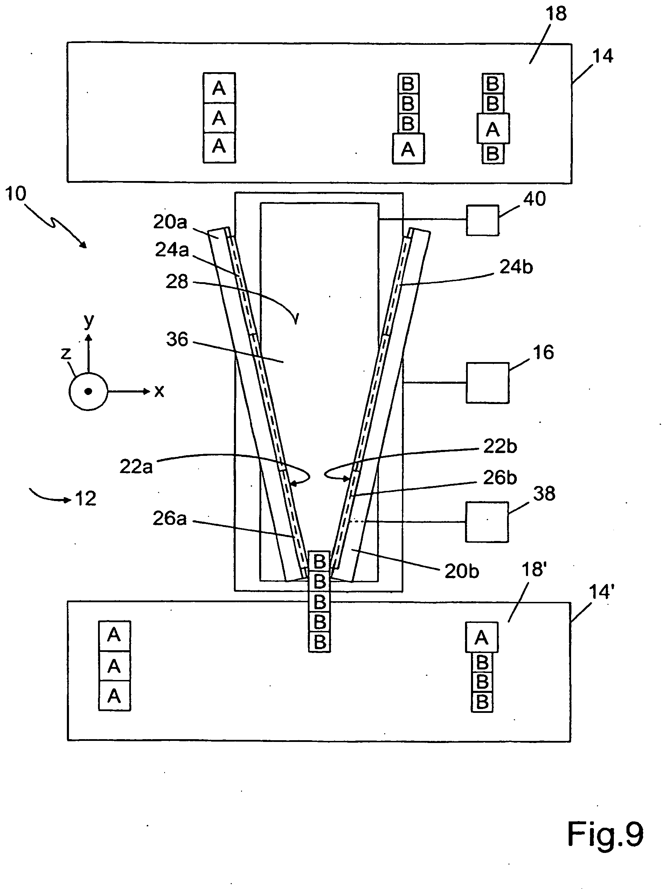

Gemäß einer ersten Ausgestaltung werden spätestens jetzt die Drehungen der Führungen 20a, 20b in die jeweils entgegengesetzten Drehrichtungen umgekehrt, sodass die entgegengesetzten Enden der Greifarme 22a, 22b das Lagergut A, B ergreifen können. Hierbei kann zusätzlich wieder eine Klemmbewegung wenigstens einer Führung 20a, 20b vorgesehen sein, sodass der erforderliche Drehwinkel erheblich geringer sein kann, als er in Figur 9 dargestellt ist. Fig. 9 zeigt hierbei die bereits begonnene Verschiebung des Lagerguts A, B von der Ablagefläche 28 auf den Regalboden 18' des Regals 14'.

Sofern eine Reihe von Lagergütern A, B verschoben werden soll, muss bei diesem Ausführungsbeispiel beachtet werden, dass beim Einlagern der Reihe von Lagergütern A, B die vorderen Enden der Greifarme 22a, 22b nunmehr das in Lagergut-Verschieberichtung Y hinterste Lagergut A, B festklemmen müssen, damit die gesamte Reihe verschoben werden kann. Bei diesem Arbeitsschritt kommen die Vorteile der biegsamen Ausgestaltung der Endstücke 24a, 24b, 26a, 26b der Greifarme 22a, 22b besonders dadurch zum Tragen, dass nicht nur das hinterste Lagergut A, B, sondern mehrere Lagergüter A, B von den Endstücken 24a, 24b, 26a, 26b geklemmt werden können, sodass eine Richtungsstabilität beim Einlagern der Reihe von Lagergütern A, B gegeben ist.

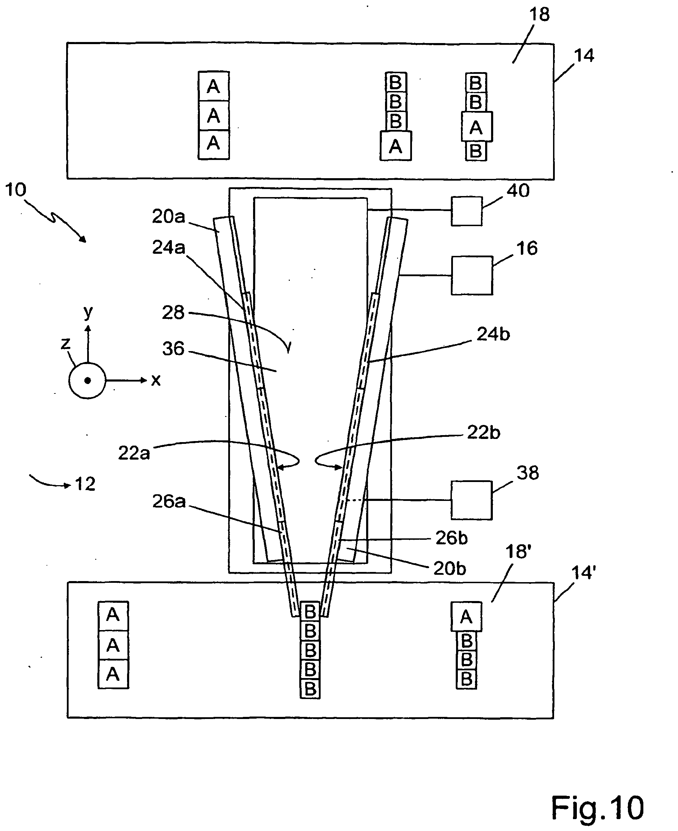

Im nächsten Verfahrenschritt werden gemäß Figur 10 die Greifarme 22a, 22b in entgegengesetzter Richtung aus den Führungen 20a, 20b ausgefahren, wodurch das Lagergut A, B von der Ablagefläche 28 des Regalbediengeräts 10 auf den Regalboden 18' des Regals 14' geschoben wird.

Gemäß einer vorteilhaften Ausgestaltung kann auch bei einem hier gezeigten Einlagern des Lagerguts A, B vorgesehen sein, dass die als Transportvorrichtung 36 ausgestaltete Ablagefläche 28 das Lagergut A, B zumindest solange weiter transportiert, bis das Lagergut A, B die Ablagefläche 28 in Richtung des Regalbodens 14' verlassen hat. Hierbei sind wieder die Bewegungen der Greifarme 22a, 22b und die der Transportvorrichtung 36 synchronisiert, sodass die Reibung zwischen dem Lagergut A, B und der Ablagefläche 28 entfällt.

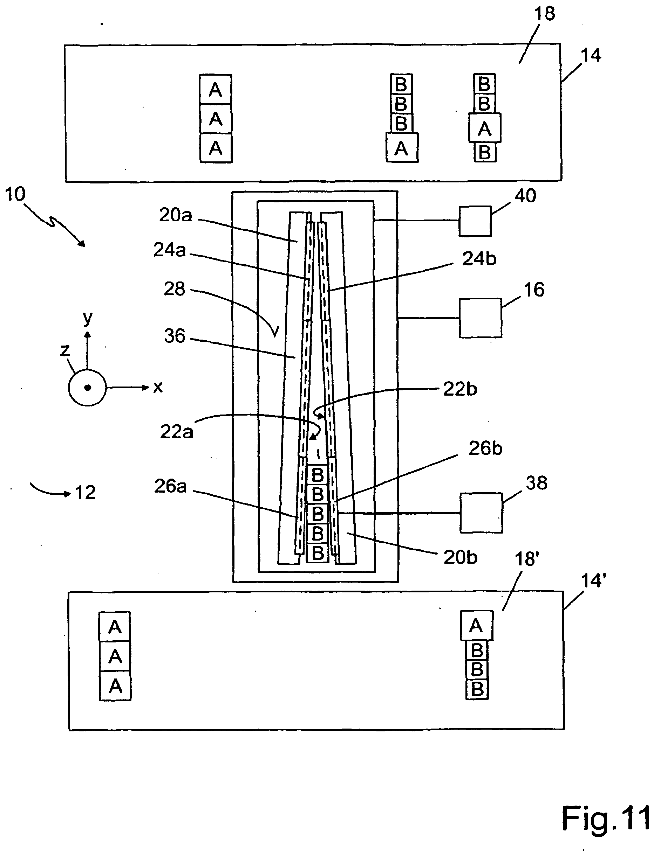

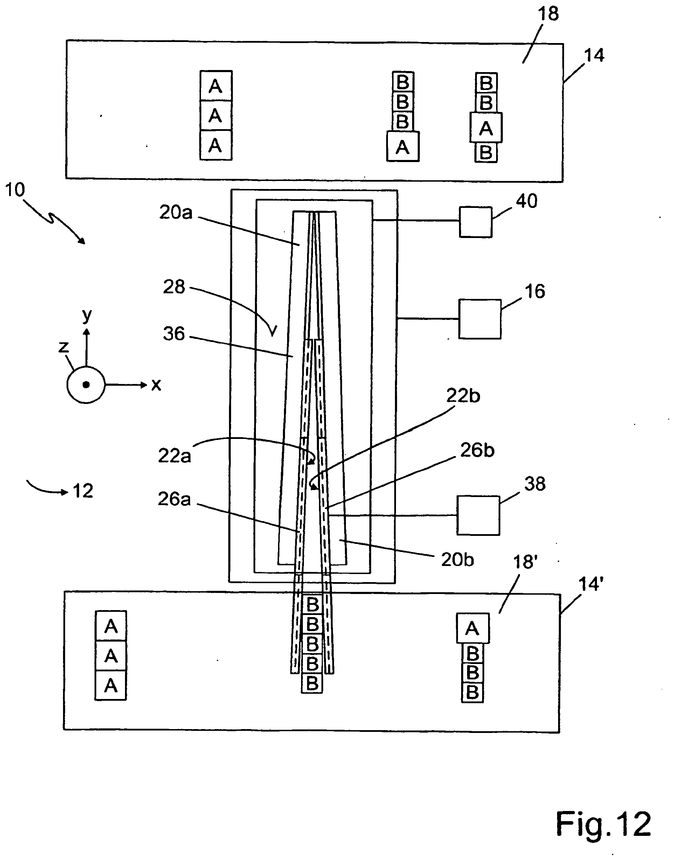

Die Figuren 11 und 12 zeigen eine vorteilhafte alternative Ausgestaltung beim Einlagern des Lagerguts A, B, bei welcher die Drehungen zumindest einer Führung 20a, 20b derart festgelegt ist, dass die Greifarme 22a, 22b bei einer Reihe von Lagergütern A, B das hinterste Lagergut in Bezug auf den Regalboden 14', 14 festklemmen. Figur 11 zeigt den Betriebszustand, bei dem das Lagergut A, B von der vorzugsweise als Transportvorrichtung 36 realisierten Ablagefläche 28 an den Rand der Ablagefläche 28 transportiert und das in Lagergut-Verschieberichtung Y hinterste Lagergut A, B festgeklemmt wurde. Figur 12 zeigt den Betriebszustand, bei dem das Lagergut A, B von den ausgefahrenen Greifarmen 22a, 22b bereits auf den Regalboden 14' ausgelagert wurde. Während der Einlagerung werden vorzugsweise sowohl der Drehwinkel der wenigstens einen Führung 20a, 20b als auch das Drehmoment, mit welchem das hinterste Lagergut A, B festgeklemmt wird, positionsabhängig nachgeführt.

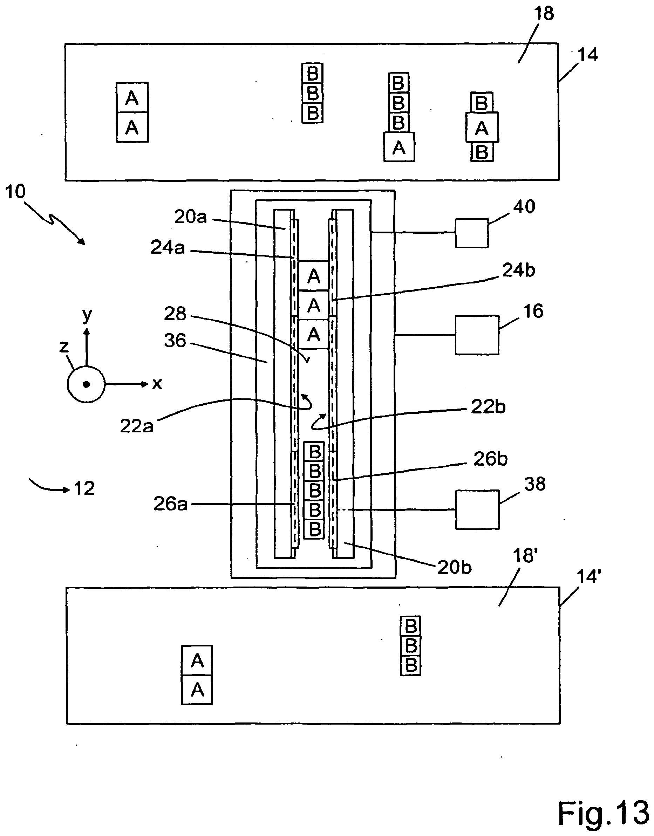

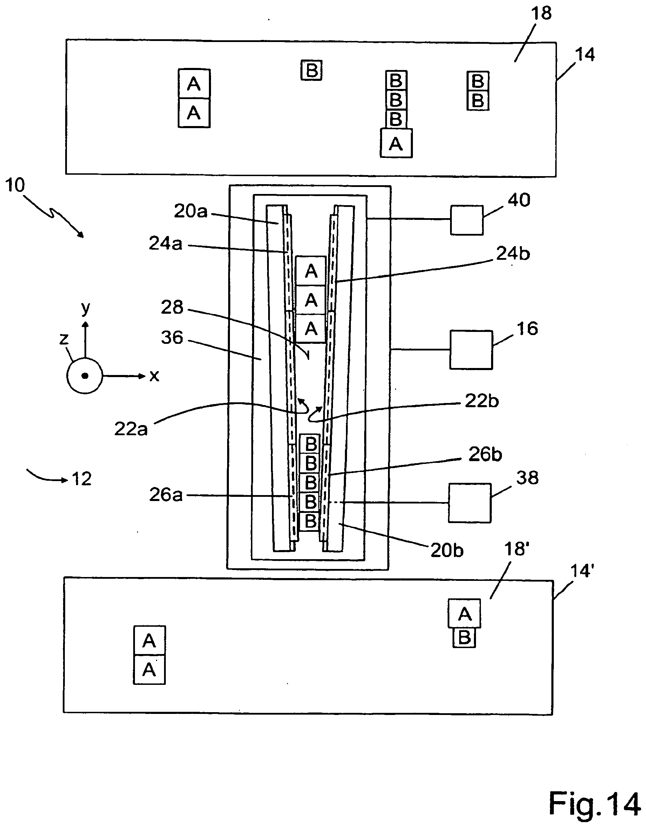

Die Figuren 13 und 14 zeigen Verfahrensschritte, bei welchen das gesamte Regalbediengerät 10 in Regalgassen-Richtung X in der Regalgasse 12 positioniert wird, um bestimmte Regalböden 18, 18' sowie bestimmte Positionen vor den Regalböden 18, 18' anzufahren. Hierbei wird vorzugsweise eine Klemmung der Lagergüter A, B auf der Ablagefläche 28 vorgesehen, um die Lagergüter A, B zu fixieren und damit während des Transports zu sichern.

Figur 13 zeigt einen Fall, bei dem unterschiedlich breite Lagergüter A, B auf der Ablagefläche 28 angeordnet sind, sodass bei einer Klemmbewegung der Führungen 20a, 20b ohne Drehung der wenigstens einen Führung 20a, 20b das weniger breite Lagergut B nicht festgeklemmt ist. Vorzugsweise wird deshalb gemäß Figur 14 während des Positionierens des Regalbediengeräts 10 eine Drehung wenigstens einer der Führungen 20a, 20b vorgesehen, womit auch unterschiedlich breite Lagergüter A, B fixiert und gesichert werden können. Hierbei ist zu beachten, dass bei Kurven, die sich insbesondere in einer von der Regalgassen-Richtung X und der Lagergut-Verschieberichtung Y aufgespannten Ebene erstrecken, stets diejenigen Lagergüter A, B festgeklemmt werden, die sich auf der äußeren Kurvenseite befinden, auf welche die Lagergüter A, B bei Kurvenfahrten rutschen könnten. Anstelle eines vollständigen Festklemmens der Lagergüter A, B reicht es bereits aus, die Drehbewegung nur soweit durchzuführen, dass die Lagergüter A, B zwar noch geringfügig auf der Auflagefläche 28 verrutschen jedoch nicht vollständig von der Auflagefläche 28 herunterrutschen können.

Eine Ausgestaltung des erfindungsgemäßen Verfahren sieht vor, dass beim Ein- und Auslagern von Lagergütern A, B bei der Ansteuerung des wenigstens einen Drehantriebs 42 oder der beiden Klemmantriebe 46, 48 die Position der Greifarme 22a, 22b und die Drehmomente derart festgelegt werden, dass die Lagergüter A, B sicher gegriffen werden und/oder dass die Außenkontur der Greifarme 22a, 22b seitlich neben den ein- oder auszulagernden Lagergütern A, B liegende Lagergüter A, B nicht berührt oder verschiebt.

## Patentansprüche

1. Regalbediengerät für Lagergüter (A, B), welche auf Regalböden (18, 18') eines Regals (14, 14') einzulagern oder von den Regalböden (18, 18') des Regals (14, 14') auszulagern oder zu transportieren sind, mit einer Ablagefläche (28) für das Lagergut (A, B), mit zwei Führungen (20a, 20b), die Greifarme (22a, 22b) aufnehmen, welche im Wesentlichen quer zur Regalgassen-Richtung (X) in Lagergut-Verschieberichtung (Y) verschiebbar und aus den Führungen (20a, 20b) ausfahrbar sind, wobei zumindest eine Führung (20a, 20b) um eine vertikale Regalachse (Z) drehbar ausgestaltet ist, sodass das Lagergut (A, B) durch ein Drehen der Führung (20a, 20b) mit den Greifarmen (22a, 22b) greifbar ist, **dadurch gekennzeichnet, dass** ein einziger Klemmantrieb (44) vorgesehen ist, mit dem die Führungen (20a, 20b) mit den Greifarmen (22a, 22b) gegeneinander quer zur Lagergut-Transportrichtung (Y) bewegbar sind.

2. Regalbediengerät nach Anspruch 1, **dadurch gekennzeichnet, dass** beide Führungen (20a, 20b) um eine vertikale Regalachse (Z) drehbar ausgestaltet sind.

3. Regalbediengerät nach Anspruch 2, **dadurch gekennzeichnet, dass** eine Drehung der beiden Führungen (20a, 20b) um denselben Winkel gegeneinander vorgesehen ist.

4. Regalbediengerät nach Anspruch 1, **dadurch gekennzeichnet, dass** die Greifarme (22a, 22b) beidseitig aus den Führungen (20a, 20b) ausfahrbar sind.

5. Regalbediengerät nach Anspruch 1, **dadurch gekennzeichnet, dass** sich die Ablagefläche (28) für das Lagergut (A, B) nahezu vollständig über die gesamte Breite (30) der Regalgasse (12) erstreckt.

6. Regalbediengerät nach Anspruch 1, **dadurch gekennzeichnet, dass** wenigstens ein vorderes Endstück (24a, 24b, 26a, 26b) wenigstens eines Greifarmes (22a, 22b) im Wesentlichen quer zur Lagergut-Verschieberichtung (Y) biegbar ausgestaltet ist.

7. Regalbediengerät nach Anspruch 1, **dadurch gekennzeichnet, dass** die Ablagefläche (28) für das Lagergut (A, B) als Transportvorrichtung (36) ausgestaltet ist, welche das Lagergut in Lagergut-Verschieberichtung (Y) transportiert.

8. Regalbediengerät nach Anspruch 7, **dadurch gekennzeichnet, dass** die Transportvorrichtung (36) für das Lagergut (A, B) als Förderband ausgestaltet ist.

9. Regalbediengerät nach Anspruch 1, **dadurch gekennzeichnet, dass** die Drehachse (34) der Führungen (20a, 20b) fest vorgegeben ist und dass zur Durchführung der Drehbewegung ein Drehantrieb (42) vorgesehen ist.

10. Regalbediengerät nach Anspruch 9, **dadurch gekennzeichnet, dass** die Drehachse (34) der Führungen (20a, 20b) im Wesentlichen in der Mitte des Regalbediengeräts (10) bezogen auf die Lagergut-Verschieberichtung (Y) und/oder bezogen auf die Regalgassen-Richtung (X) positioniert ist.

11. Verfahren zum Betreiben des Regalbediengeräts (10) nach einem der vorhergehenden Ansprüche, **dadurch gekennzeichnet, dass** das Lagergut (A, B) durch eine Drehung wenigstens einer Führung (20a, 20b) festgeklemmt wird.

12. Verfahren nach Anspruch 11, **dadurch gekennzeichnet, dass** das Lagergut (A, B) durch eine Klemmbewegung wenigstens einer Führung (20a, 20b) festgeklemmt wird.

13. Verfahren nach Anspruch 11, **dadurch gekennzeichnet, dass** das auf der Ablagefläche (28) vorhandene Lagergut (A, B) durch eine von einem Klemmantrieb (44, 46, 48) bereitgestellte Klemmbewegung wenigstens einer Führung (20a, 20b) festgeklemmt wird.

14. Verfahren nach Anspruch 11, **dadurch gekennzeichnet, dass** das auf der Ablagefläche (28) vorhandene Lagergut (A, B) während des Positionierens des Regalbediengeräts (10) in der Regalgasse (12) durch eine Drehung wenigstens einer Führung (20a, 20b) fixiert und gesichert wird.

15. Verfahren nach Anspruch 11 und Anspruch 7, **dadurch gekennzeichnet, dass** die Transportvorrichtung (26) und die Greifarme (22a, 22b) zum Transportieren des Lagerguts (A, B) auf dem Regalbediengerät (10) synchron angetrieben werden.

16. Verfahren nach Anspruch 11, **dadurch gekennzeichnet, dass** beim Ein- und Auslagern von Lagergütern (A, B) bei der Ansteuerung des wenigstens einen Drehantriebs (42) die Position der Greifarme (22a, 22b) und die Drehmomente derart festgelegt werden, dass die Lagergüter (A, B) sicher gegriffen werden und/oder dass die Außenkontur der Greifarme (22a, 22b) seitlich neben den ein- oder auszulagernden Lagergütern (A, B) liegende Lagergüter (A, B) nicht berührt oder verschiebt.

## Claims

1. A shelf operating device gripper for stored goods (A, B) which are to be stored on shelf surfaces (18, 18') of a shelf (14, 14') or removed or transported from the shelf surfaces (18, 18') of the shelf, comprising a storage surface (28) for the stored goods (A, B), two guides (20a, 20b) which accommodate the gripping arms (22a, 22b) which are displaceable substantially transversally to the shelf lane direction (X) in the stored goods displacement direction (Y) and can be extended from the guides (20a, 20b), wherein at least one of the guides (20a, 20b) is arranged to be rotatable about a vertical shelf axis (Z), so that the stored goods (A, B) can be gripped with the gripping arms (22a, 22b) by rotation of the guide (20a, 20b), **characterized in that** a single clamping drive (44) is provided with which the guides (20a, 20b) with the gripping arms (22a, 22b) can be moved against one another transversally to the stored goods displacement direction (Y).

2. A shelf operating device gripper according to claim 1, **characterized in that** both guides (20a, 20b) are arranged to be rotatable about a vertical shelf axis (Z).

3. A shelf operating device gripper according to claim 2, **characterized in that** a rotation of the two guides (20a, 20b) is provided about the same angle relative to one another.

4. A shelf operating device gripper according to claim 1, **characterized in that** the gripping arms (22a, 22b) can be extended on both sides out of the guides (20a, 20b).

5. A shelf operating device gripper according to claim 1, **characterized in that** the storage surface (28) for the stored goods (A, B) extends nearly completely over the entire width (30) of the shelf lane (12).

6. A shelf operating device gripper according to claim 1, **characterized in that** at least one front end piece (24a, 24b, 26a, 26b) of at least one gripping arm (22a, 22b) is arranged to be bendable substantially transversally to the stored goods displacement direction (Y).

7. A shelf operating device gripper according to claim 1, **characterized in that** the storage surface (28) for the stored goods (A, B) is arranged as a conveying apparatus (36) which conveys the stored goods in the stored goods displacement direction (Y).

8. A shelf operating device gripper according to claim 7, **characterized in that** the conveying apparatus (36) for the stored goods (A, B) is arranged as a conveyor belt.

9. A shelf operating device gripper according to claim 1, **characterized in that** the rotational axis (34) of the guides (20a, 20b) is predetermined in a fixed way and a rotary drive (42) is provided for performing the rotational movement.

10. A shelf operating device gripper according to claim 9, **characterized in that** the rotational axis (34) of the guides (20a, 20b) is positioned substantially in the middle of the shelf operating device gripper (10) relative to the stored goods displacement direction (Y) and/or relative to the shelf lane direction (X).

11. A method for operating the shelf operating device gripper (10) according to one of the preceding claims, **characterized in that** the stored goods (A, B) are tightly clamped by a rotation of a at least one guide (20a, 20b).

12. A method according to claim 11, **characterized in that** the stored goods (A, B) are tightly clamped by a clamping movement of at least one guide (20a, 20b).

13. A method according to claim 11, **characterized in that** the stored goods (A, B) disposed on the storage surface (28) are tightly clamped by a clamping movement of at least one guide (20a, 20b), which clamping movement is provided by a clamping drive (44, 46, 48).

14. A method according to claim 11, **characterized in that** the stored goods (A, B) disposed on the storage surface (28) are fixed and secured by a rotation of at least one guide (20a, 20b) during the positioning of the shelf storage device gripper (10) in the shelf lane (12).

15. A method according to claim 11 and claim 7, **characterized in that** the conveying apparatus (25) and the gripping arms (22a, 22b) are driven synchronously for conveying the stored goods (A, B) on the shelf storage device gripper (10).

16. A method according to claim 11, **characterized in that** during the storage and removal of stored goods (A, B) the position of the gripping arms (22a, 22b) and the torques are determined during the driving of the at least one rotary drive (42) in such a way that the stored goods (A, B) are gripped securely and/or that the outside contour of the gripper arms (22a, 22b) does not touch or displace stored goods (A, B) disposed laterally adjacent to the stored goods (A, B) being stored or removed.

## Revendications

1. Appareil de desserte de rayonnage pour des produits stockés (A, B), les produits étant destinés à être rangés sur des surfaces de rangement (18, 18') d'un rayonnage (14, 14') ou d'être prélevés des surfaces de rangement du rayonnage (18, 18') ou d'être transportés,
comprenant dans l'appareil une surface de dépose (28) pour le produit stocké (A, B), deux guides (20a, 20b) recevant des bras de préhension (22a, 22b) coulissant principalement dans la direction transversale à la direction (X) des couloirs d'étagères dans la direction de déplacement des produits (Y) et pouvant être dégagés des guides (20a, 20b), appareil,
au moins un guide (20a, 20b) peut être tourné autour d'un axe vertical d'étagère (Z) pour permettre la prise du produit (A, B) avec les bras de préhension (22a, 22b) par rotation des guides (20a, 20b),
**caractérisé en ce qu'**un unique entraînement à pince (44) par lequel les guides (20a, 20b) avec les bras de préhension (22a, 22b) peuvent être déplacés l'un par rapport à l'autre transversalement à la direction de transport de produit (Y).

2. Appareil de desserte de rayonnage selon la revendication 1, **caractérisé en ce que**
les deux guides (20a, 20b) peuvent tourner autour d'un axe vertical de rayonnage (Z).

3. Appareil de desserte de rayonnage selon la revendication 2, **caractérisé en ce que**
les deux guides (20a, 20b) peuvent tourner du même angle l'un par rapport à l'autre.

4. Appareil de desserte de rayonnage selon la revendication 1, **caractérisé en ce que**
les bras de préhension (22a, 22b) peuvent être dégagés des guides (20a, 20b) des deux côtés.

5. Appareil de desserte de rayonnage selon la revendication 1, **caractérisé en ce que**
la surface de dépose (28) pour le produit (A, B) s'étend pratiquement sur toute la largeur (30) du couloir de rayonnage (12).

6. Appareil de desserte de rayonnage selon la revendication 1, **caractérisé en ce qu'**
au moins une extrémité avant (24a, 24b, 26a, 26b) d'au moins un bras de préhension (22a, 22b) est montée flexible essentiellement dans la direction transversale à la direction de coulissement (Y) des produits stockés.

7. Appareil de desserte de rayonnage selon la revendication 1, **caractérisé en ce que**
la surface de dépose (28) du produit (A, B) est réalisée sous la forme d'un dispositif de transport (36) transportant le produit dans la direction de coulissement de produit (Y).

8. Appareil de desserte de rayonnage selon la revendication 7, **caractérisé en ce que**
le dispositif de transport (36) du produit (A, B) est une bande transporteuse.

9. Appareil de desserte de rayonnage selon la revendication 1, **caractérisé en ce que**
l'axe de rotation (34) des guides (20a, 20b) est prédéfini de manière fixe, et
un entraînement en rotation (42) assure le mouvement de rotation.

10. Appareil de desserte de rayonnage selon la revendication 9, **caractérisé en ce que**
l'axe de rotation (34) des guides (20a, 20b) se situe pratiquement au milieu de l'appareil de desserte (10) par rapport à la direction de coulissement des produits stockés (Y) et/ou par rapport à la direction (X) des couloirs d'étagères.

11. Procédé de gestion d'un appareil de desserte de rayonnage selon l'une des revendications précédentes,
**caractérisé en ce que**
le produit (A, B) est pincé par la rotation d'au moins un guide (20a, 20b).

12. Procédé de gestion selon la revendication 11,
**caractérisé en ce que**
le produit (A, B) est pincé par un mouvement de pincement d'au moins un guide (20a, 20b).

13. Procédé de gestion selon la revendication 11,
**caractérisé en ce que**
le produit (A, B) se trouvant sur la surface de dépose (28) est pincé par le mouvement de pincement d'au moins un guide (20a, 20b), assuré par l'entraînement de serrage (44, 46, 48).

14. Procédé de gestion selon la revendication 11,
**caractérisé en ce que**
le produit (A, B) qui se trouve sur la surface de dépose (28) est bloqué et protégé par un mouvement de rotation d'au moins un guide (20a, 20b) au cours du positionnement de l'appareil de desserte de rayonnage (10) dans le couloir de rayonnage (12).

15. Procédé selon la revendication 11 et la revendication 7,
**caractérisé en ce que**
la direction de transport (26) et des bras de préhension (22a, 22b) sont entraînés en synchronisme pour transporter le produit (A, B) sur l'appareil de desserte de rayonnage (10).

16. Procédé selon la revendication 11,
**caractérisé en ce que**
pour les opérations de stockage et de déstockage de produit (A, B), pour lesquels la commande d'au moins un entraînement en rotation (42) fixe la position de bras de préhension (22a, 22b) et les associe pour que les produits (A, B) soient pris de manière certaine et/ou que le contour extérieur des bras de préhension (22a, 22b) ne touche ni ne déplace les produits (A, B) placés à côté d'un produit (A, B) à stocker ou à déstocker.
